# EUROPÄISCHE PATENTSCHRIFT

(11) **EP 0 697 507 B1**
(45) Veröffentlichungstag und Bekanntmachung des Hinweises auf die Patenterteilung: **16.10.2002**
(21) Anmeldenummer: 95810495.2
(22) Anmeldetag: 03.08.1995
(51) Int. Cl.: F02C 9/46, F23R 3/34

(54) **Verfahren und Anordnung zur Drehzahlregelung einer Gasturbine bei Lastabwurf**
Gasturbine speed control method and device for sudden load loss
Régulation de vitesse et appareillage pour turbine à gaz en cas de variation de charge soudaine

(30) Priorität: 19.08.1994 DE 4429539
(43) Veröffentlichungstag der Anmeldung: 21.02.1996
(73) Patentinhaber: Alstom, 75116 Paris (FR)
(72) Erfinder: Hollinger, Klaus, CH-4315 Zuzgen (CH); Müller, Gerhard, CH-5430 Wettingen (CH)
(74) Vertreter: Liebe, Rainer

(56) Entgegenhaltungen:
- EP-A- 0 399 336
- EP-A- 0 473 537
- GB-A- 2 041 085
- US-A- 4 817 376
- US-A- 5 361 576

## Beschreibung

### Technisches Gebiet

Die Erfindung betrifft ein Verfahren zur Drehzahlregelung einer Gasturbine bei Lastabwurf, deren Brennkammer mit Vormischbrennern betrieben wird und deren Brennstoffmassenstrom zur Brennkammer über Regelventile und Brennerschaltventile in der Brennstoffleitung geregelt wird.

### Stand der Technik

Derartige Verfahren sind bekannt. Bei Störfällen des Gasturbinenbetriebs, wie Defekt in der Schaltanlage, Probleme mit der Kesselwasserversorgung, plötzliches Abschalten von Verbrauchern, ist es notwendig, die Gasturbine sofort vom Stromnetz zu trennen, indem der Generatorschalter geöffnet wird. Durch diesen Lastabwurf genannten Vorgang steigt die Drehzahl der Turbine durch den Wegfall der Last an. Um die Drehzahl der Gasturbine unter Kontrolle zu bekommen, wird die Brennstoffzuführung mit Regelventilen gedrosselt, jedoch nur soweit, dass die Flamme in der Brennkammer nicht vollständig erlischt. Es ist vorteilhaft, die Gasturbine auf Nenndrehzahl zu halten, um die Beanspruchung der Gasturbine zu senken und um die Anlage nach Behebung der Störung schneller wieder ans Netz bringen zu können.
Bei den bisher verwendeten Diffusionsbrennern, deren Flamme über ein weites Mischungsverhältnis zwischen Brennstoff und Luft stabil ist, stellt die Regelung der Brennstoffzufuhr, und damit der Drehzahlregelung über Regelventile, kein Problem dar. Um jedoch die Schadstoffemission, vor allem die Stickoxidemission zu senken, werden die Diffusionsbrenner in bereits vorhandenen Anlagen durch Vormischbrenner ersetzt. Diese Vormischbrenner werden mager mit einem sehr hohen Luftanteil betrieben, was sehr geringe Stickoxidemissionen zur Folge hat. Ihre Flamme ist jedoch nur in einem engen Mischungsverhältnis zwischen Brennstoff und Luft stabil. Dies stellt bei Lastabwurf hohe Anforderungen an die Regelventile. Die in der Anlage bereits vorhandenen Regelventile sind üblicherweise nicht exakt genug regelbar und daher nicht für diese Anforderungen ausgelegt. Die Regelventile müssen deshalb ersetzt werden, was jedoch sehr zeitaufwendig und damit kostenintensiv ist.

Es ist bekannt, die Brennkammer einer Gasturbine mit zwei Gruppen von Brennern zu betreiben, deren Brennstoffzufuhr über unterschiedliche Regelventile geregelt wird (GB 2041085 A).
Soll die Gasturbine in den Leerlaufzustand heruntergefahren werden, wird eine Brennergruppe abgeschaltet und die verbleibende Gruppe als Leerlaufbrenner weiterbetrieben.
Solche Systeme bedürfen aufwendiger Regeleinrichtungen, um insbesondere beim Zuschalten der abgestellten Brenner während des Hochfahrens der Turbine negative Auswirkungen auf die Leerlaufbrenner und die Gefahr eines Verlöschens der Flamme zu unterbinden.

### Darstellung der Erfindung

Der Erfindung liegt die Aufgabe zugrunde, bei einem Verfahren der eingangs genannten Art den zeitaufwendigen und kostenintensiven Ersatz der vorhandenen Regelventile zu vermeiden.

Erfindungsgemäss wird dies dadurch erreicht, dass ein Teil der Vormischbrenner als Leerlaufvormischbrenner eingesetzt wird und der restliche Teil nur als Hauptbrenner betrieben wird, und dass bei Lastabwurf die Hauptbrenner mittels des Brennerschaltventiles abgeschaltet werden und die Leerlaufvormischbrenner über eine geregelte Umgehungsleitung mit Brennstoff versorgt werden.

Die Vorteile der Erfindung sind unter anderem darin zu sehen, dass durch den Einbau der Umgehungsleitung die vorhandenen Regelventile für den normalen Betrieb der Gasturbine weiterhin benutzt werden können und nicht ersetzt werden müssen. Trotz der ungünstigen Regelungscharakteristik der Regelventile kann die Gasturbine durch die Umgehungsleitung und die Umgehungsventile bei Lastabwurf auf Nenndrehzahl gehalten werden.
Es ist vorteilhaft zwei verschiedene Typen von Umgehungsventilen zu verwenden, ein schnell öffnendes und ein langsam schliessendes, das in seiner Charakteristik derjenigen des Regelventiles entspricht. Zudem ist es vorteilhaft durch eine Durchflussbegrenzung, eine sogenannte Blende, den Brennstoffmassenstrom durch die Umgehungsleitung auf das erforderliche Mass einzustellen.

Um weitere Kosten und Zeit zu sparen ist es besonders zweckmässig, die Umgehungsleitung an bereits vorhandene Flansche der Brennstoffleitung zu befestigen. Diese Flansche sind ohnehin an der Brennstoffleitung zu Mess- und Beobachtungszwecken angebracht.

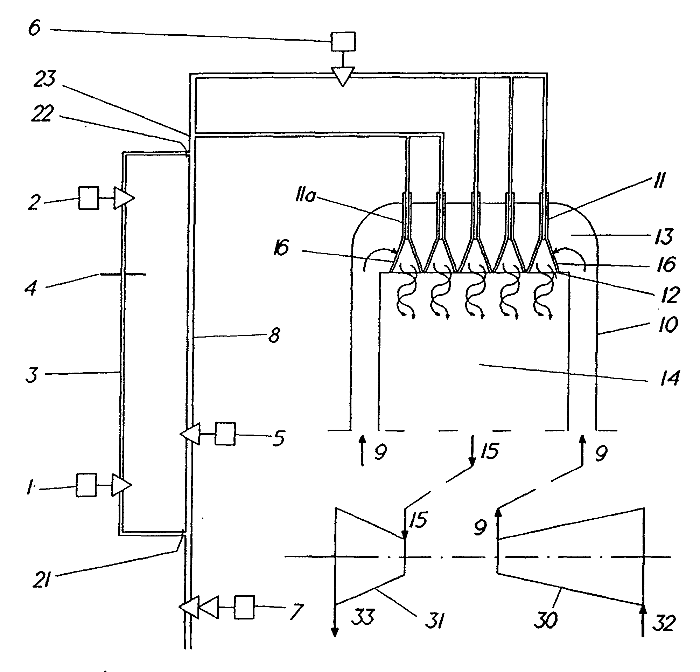

### Kurze Beschreibung der Zeichnung

In der Zeichnung ist ein Ausführungsbeispiel der Erfindung anhand einer schematischen Darstellung der Gasturbine, der schematischen Brennstoffleitungen sowie eines Teillängsschnittes der Brennkammer dargestellt.

Es sind nur die für das Verständnis der Erfindung wesentlichen Elemente gezeigt. Nicht dargestellt sind der Generator sowie die restlichen Elemente der Gasturbinenanlage.

### Weg zur Ausführung der Erfindung

Die Gasturbinenanlage besteht im wesentlichen aus einem Verdichter 30 und einer Gasturbine 31 die über eine nicht dargestellte Welle verbunden sind, sowie einer Brennkammer 10. In dem schematisch dargestellten Verdichter wird Luft 32 angesaugt, komprimiert und die verdichtete Luft 9 in das Plenum 13 der hier verwendeten Silo-Brennkammer 10 geleitet. Von dort tritt die verdichtete Luft über Vormischbrenner 11, in denen der Luft Brennstoff zugeführt wird, in einen Brennraum 14 ein, wo das Brennstoff-Luft-Gemisch verbrannt wird. Das so entstandene Heissgas 15 wird in eine Gasturbine 31 geleitet, wo es entspannt wird und ein Teil der Energie des Heissgases in Drehenergie umgewandelt wird. Das entstandene Abgas 33 wird über einen nicht dargestellten Kamin abgeführt.

Bei den schematisch dargestellten Vormischbrennern 11 handelt es sich um sogenannte Doppelkegelbrenner, wie sie beispielsweise aus der EP-B1-0 321 809 bekannt sind. Im wesentlichen besteht ein Doppelkegelbrenner aus zwei hohlen, kegelförmigen Teilkörpern, die in Strömungsrichtung ineinandergeschachtelt sind. Dabei sind die jeweiligen Mittelachsen der beiden Teilkörper gegeneinander versetzt. Die benachbarten Wandungen der beiden Teilkörper bilden in deren Längserstreckung tangentiale Schlitze 16 für die verdichtete Luft 9, die auf diese Weise in das Brennerinnere gelangt. Dort ist eine erste Brennstoffdüse für flüssigen Brennstoff angeordnet. Der Brennstoff wird in einem spitzen Winkel in die Hohlkegel einged□st. Das entstehende kegelige Brennstoffprofil wird von der tangential einströmenden Luft 9 umschlossen. In axialer Richtung wird die Konzentration des Brennstoffes fortlaufend infolge der Vermischung mit der verdichteten Luft abgebaut. Wird der Brenner mit gasförmigem Brennstoff betrieben, sind hierzu im Bereich der tangentialen Schlitze 16 in den Wandungen der beiden Teilkörper in Längsrichtung verteilte Gaseinströmöffnungen vorgesehen. Im Gasbetrieb beginnt die Gemischbildung mit der Verbrennungsluft somit bereits in der Zone der Eintrittsschlitze 16. Es versteht sich, dass auf diese Weise auch ein Mischbetrieb mit beiden Brennstoffarten möglich ist.
Am Brenneraustritt 12 stellt sich eine möglichst homogene Brennstoffkonzentration über dem beaufschlagten kreisringförmigen Querschnitt ein. Es entsteht am Brenneraustritt eine definierte kalottenförmige Rückströmzone, an deren Spitze die Zündung erfolgt.

Die Brennstoffleitungen sind in der Zeichnung schematisch dargestellt. Eine Brennstoffleitung 8 führt über ein zur Notabschaltung dienendes Schnellschlussventil 7 zu einem Regelventil 5. Von dort führt die Brennstoffleitung zu einer Verzweigung 23, von der sie in Leerlaufvormischbrenner 11a und über ein Brennerschaltventil 6 in die übrigen Vormischbrenner 11 mündet.
Das Regelventil 5 wird von einer Umgehungsleitung 3 umgangen, die an den Flanschen 21 und 22 angebracht ist. In der Umgehungsleitung befinden sich ein erstes Umgehungsventil 1, ein zweites Umgehungsventil 2 und eine Durchflussbegrenzung 4, genannt Blende.

Bei normalem Betrieb der Gasturbine ist das zweite Umgehungsventil 2 geschlossen. Das erste Umgehungsventil 1, sowie das Brennerschaltventil 6 und das Schnellschlussventil 7 sind offen. Der Brennstoffmassenfluss und damit die Drehzahl der Gasturbine werden über das Regelventil 5 geregelt. Wird das Regelventil 5 gedrosselt, verringert sich der Brennstoffmassenstrom und die Brennerleistung sinkt, weshalb die Drehzahl der Gasturbine abnimmt.

Tritt ein Lastabwurf ein, erhöht sich die Drehzahl der Gasturbine, da keine Leistung abgeführt wird. Das Brennerschaltventil 6 wird sofort geschlossen und nur noch die Leerlaufvormischbrenner 11a bleiben in Betrieb. Gleichzeitig versucht das Regelventil 5 die Drehzahl auf Nenndrehzahl zu senken und schliesst sich. Damit der Brennstoffdruck vor den Leerlaufvormischbrennern nicht unter das erforderliche Mass sinkt und die Flamme erlischt, öffnet das zweite Umgehungsventil 2 in Sekundenbruchteilen. Die Umgehungsleitung 3 speist nun die Leerlaufvormischbrenner, wobei mit Hilfe der Blende 4 die zum Betrieb notwendige Brennstoffmenge eingestellt wird. Sobald sich die Drehzahl der Gasturbine nach einigen Sekunden auf der Nenndrehzahl stabilisiert hat, schliesst das erste Umgehungsventil 1 so langsam, dass das Regelventil 5 nachsteuern kann. Wenn das erste Umgehungsventil vollständig geschlossen ist, übernimmt das Regelventil 5 wieder die Regelung des Betriebes der Gasturbine.
Das zweite Umgehungsventil 2 wird nun geschlossen und das erste Umgehungsventil geöffnet. Die Gasturbine ist wieder bereit für den normalen Betrieb und für den nächsten Lastabwurf.

Die Ausgestaltung der Umgehungsleitung, die Befestigung an der Brennstoffleitung, sowie die Anzahl der Umgehungsventile sind beliebig. Voraussetzung ist nur, dass das Regelventil umgangen wird, und dass die Umgehungsleitung schnell geöffnet und dem Regelventil entsprechend geschlossen werden kann.

Zur Regelung der Brenner können mehrere Regelventile sowie Brennerschaltventile zur Anwendung kommen, wobei dann die Anzahl der Umgehungsleitungen den Erfordernissen angepasst werden muss.
Selbstverständlich ist jeder mögliche Brennkammertyp, wie Ringbrennkammer oder Silobrennkammer, zur Anwendung der Erfindung geeignet.

### Bezugszeichenliste

- 1: Umgehungsventil 1
- 2: Umgehungsventil 2
- 3: Umgehungsleitung
- 4: Durchflussbegrenzung / Blende
- 5: Regelventil
- 6: Brennerschaltventil
- 7: Schnellschlussventil
- 8: Brennstoffleitung
- 9: Verdichtete Luft
- 10: Brennkammer
- 11: Vormischbrenner
- 11a: Leerlauf-Vormischbrenner
- 12: Brenneraustritt
- 13: Plenum
- 14: Brennraum
- 15: Heissgase
- 16: tangentiale Schlitze

- 21: Flansch
- 22: Flansch
- 23: Verzweigung

- 30: Verdichter
- 31: Gasturbine
- 32: Lufteintritt
- 33: Abgase

## Patentansprüche

1. Verfahren zur Drehzahlregelung einer Gasturbine bei Lastabwurf, deren Brennkammer (10) mit Vormischbrennern (11) betrieben wird und der in einer Brennstoffleitung (8) zur Brennkammer (10) geförderte Brennstoffmassenstrom über mindestens ein Regelventil (5) und ein Brennerschaltventil (6) geregelt wird, wobei ein Teil der Vormischbrenner (11) als Leerlaufvormischbrenner (11a) eingesetzt und der restliche Teil nur als Hauptbrenner betrieben wird, **dadurch gekennzeichnet, dass** bei Lastabwurf die Hauptbrenner mittels des Brennerschaltventils (6) abgeschaltet werden, während die Leerlaufvormischbrenner (11a) über eine geregelte Umgehungsleitung (3) des Regelventils (5) mit Brennstoff versorgt werden.

2. Verfahren nach Anspruch 1, **dadurch gekennzeichnet, dass** bei Lastabwurf das Regelventil (5) in der Brennstoffleitung (8) geschlossen wird und ein erstes Umgehungsventil (1) in der Umgehungsleitung (3) voll offen ist und dass ein zweites Umgehungsventil (2) in der Umgehungsleitung sich schlagartig öffnet.

3. Anordnung zur Drehzahlregelung einer Gasturbine bei Lastabwurf, bestehend aus einer Brennkammer (10), mit Vormischbrennern (11), einer Brennstoffleitung (8) zur Brennkammer (10) mit mindestens einem Regelventil (5) und einem Brennerschaltventil (6) wobei ein Teil der Vormischbrenner (11) als Leerlaufvormischbrenner (11a) eingesetzt und der restliche Teil nur als Hauptbrenner betrieben wird, **gekennzeichnet durch** eine geregelte Umgehungsleitung (3), welche das Regelventil (5) umgeht.

4. Anordnung nach Anspruch 3, **dadurch gekennzeichnet, dass** in der Umgehungsleitung (3) zwei Umgehungsventile (1) und (2) mit einer dazwischenliegenden, zur Mengeneinstellung des Leerlaufbrennstoffes dienenden Blende (4) angeordnet sind.

## Claims

1. Method of regulating the rotational speed of a gas turbine during load disconnection, the combustion chamber (10) of which is operated with premixing burners (11) and the fuel mass flow delivered in a fuel line (8) to the combustion chamber (10) is regulated via at least one regulating valve (5) and a burner control valve (6), some of the premixing burners (11) being used as idling premixing burners (11a) and the rest being operated only as main burners, **characterized in that**, during load disconnection, the main burners are shut off by means of the burner control valve (6), while the idling premixing burners (11a) are supplied with fuel via a regulated bypass line (3) of the regulating valve (5).

2. Method according to Claim 1, **characterized in that**, during load disconnection, the regulating valve (5) in the fuel line (8) is closed and a first bypass valve (1) in the bypass line (3) is fully open, and **in that** a second bypass valve (2) in the bypass line opens suddenly.

3. Arrangement for regulating the rotational speed of a gas turbine during load disconnection, consisting of a combustion chamber (10) with premixing burners (11), a fuel line (8) to the combustion chamber (10) with at least one regulating valve (5) and a burner control valve (6), some of the premixing burners (11) being used as idling premixing burners (11a) and the rest being operated only as main burners, **characterized by** a regulated bypass line (3) which bypasses the regulating valve (5).

4. Arrangement according to Claim 3, **characterized in that** two bypass valves (1) and (2) having an intermediate orifice (4) serving to set the quantity of the idling fuel are arranged in the bypass line (3).

## Revendications

1. Procédé pour la régulation de la vitesse d'une turbine à gaz en cas de variation de charge soudaine, dont la chambre de combustion (10) fonctionne avec des brûleurs à prémélange (11) et le débit massique de combustible transporté vers la chambre de combustion dans une conduite de combustible (8) est régulé par au moins une vanne de régulation (5) et une vanne (6) de commutation des brûleurs, dans lequel une partie des brûleurs à prémélange (11) sont utilisés comme brûleurs à prémélange de ralenti (11a) et la partie restante ne fonctionne que comme brûleurs principaux, **caractérisé en ce qu'**en cas de variation de charge soudaine, les brûleurs principaux sont arrêtés au moyen de la vanne (6) de commutation des brûleurs tandis que les brûleurs à prémélange de ralenti (11a) sont alimentés en combustible par une conduite de dérivation régulée (3) de la vanne de régulation (5).

2. Procédé suivant la revendication 1, **caractérisé en ce qu'**en cas de variation de charge soudaine, la vanne de régulation (5) dans la conduite de combustible (8) est fermée et une première vanne de dérivation (1) dans la conduite de dérivation (3) est entièrement ouverte et **en ce qu'**une seconde vanne de dérivation (2) dans la conduite de dérivation s'ouvre brusquement.

3. Dispositif pour la régulation de la vitesse d'une turbine à gaz en cas de variation de charge soudaine, se composant d'une chambre de combustion (10) avec des brûleurs à prémélange (11), une conduite de combustible (8) vers la chambre de combustion (10) avec au moins une vanne de régulation (5) et une vanne (6) de commutation des brûleurs, dans lequel une partie des brûleurs à prémélange (11) sont utilisés comme brûleurs à prémélange de ralenti (11a) et la partie restante ne fonctionne que comme brûleurs principaux,
**caractérisé par** une conduite de dérivation régulée (3), qui contourne la vanne de régulation (5).

4. Dispositif suivant la revendication 3, **caractérisé en ce que** deux vannes de dérivation (1) et (2) sont disposées dans la conduite de dérivation (3), avec un diaphragme (4) disposé entre celles-ci servant au réglage de la quantité de combustible pour le ralenti.
